# EUROPÄISCHE PATENTSCHRIFT

(11) **EP 0 485 332 B1**
(45) Veröffentlichungstag und Bekanntmachung des Hinweises auf die Patenterteilung: **15.02.1995**
(21) Anmeldenummer: 91810823.4
(22) Anmeldetag: 25.10.1991
(51) Int. Cl.: E04C 5/16, F16B 7/04, F16B 2/20, E04G 21/12

(54) **Verbindungsklammer, insbesondere zum Verbinden von Armierungseisen**
Fastening clip, in particular for joining reinforcing rods
Agrafe de fixation, notamment pour la connexion de fers d'armature

(30) Priorität: 06.11.1990 CH 3524/90
(43) Veröffentlichungstag der Anmeldung: 13.05.1992
(73) Patentinhaber: Niggli, Peter, CH-7250 Klosters (CH)
(72) Erfinder: Niggli, Peter, CH-7250 Klosters (CH)
(74) Vertreter: Riederer, Conrad A., Dr.

(56) Entgegenhaltungen:
- CH-A- 425 155
- DE-A- 3 545 920
- DE-C- 848 696
- FR-A- 1 599 202

## Beschreibung

Die Erfindung betrifft eine Verbindungsklammer zum Verbinden eines ersten länglichen Gegenstandes mit einem zweiten länglichen Gegenstand, die sich krenzen, insbesondere von Armierungseisen, mit mindestens einer ersten Klemmbacke, welche von einer Seite her am ersten Gegenstand angreifen kann, zwei zweiten Klemmbacken, welche von der entgegengesetzten Seite her am zweiten Gegenstand angreifen können, Federmitteln, um Klemmkraft für die Klemmbacken zu erzeugen, und mindestens einem Fuss zur Auflage auf einem Schalungsbrett.

Bei der Erstellung von Bauwerken aus Eisenbeton stellt das Legen der Armierungseisen eine wichtige und anspruchsvolle Arbeit dar. Die Armierungseisen müssen in den richtigen Abständen angeordnet und gegen Verschiebung beim Einbringen der Betonmasse gesichert werden. Durch ungewollte Verschiebung von Armierungseisen kann die Festigkeit des Bauwerks vermindert werden. Probleme können auch entstehen, wenn ein Armierungseisen zu nahe an die Oberfläche zu liegen kommt. Es kann dann durch Eindringen des Wassers zur Rostbildung kommen, wodurch Oberflächenschichten des Bauwerks abgesprengt werden. Um Armierungseisen in der gewünschten Sollage zu sichern, sind eine Vielzahl von Hilfsmitteln bekannt. So werden beispielsweise die Armierungseisen an Kreuzungsstellen miteinander mit Draht verbunden. Die Herstellung solcher Verbindungen nimmt relativ viel Zeit in Anspruch. Dies ist insbesondere dann der Fall, wenn die Verbindung an relativ unzugänglichen Stellen erfolgen muss. Nachteilig ist bei solchen Drahtverbindungen auch, dass sie keine Gewähr bieten, dass im fertigen Bauwerk die Armierungseisen nicht zu nahe an die Oberfläche zu liegen kommen.

Die CH-A-425 155 zeigt eine Verbindungsklammer aus Kunststoff, welche eine Führungsrinne aufweist, die von einer Seite her an einem ersten Armierungseisen angreifen kann. Zwei Klemmbacken sind vorgesehen, welche von der entgegengesetzten Seite her an einem im rechten Winkel zum ersten Armierungseisen angeordneten zweiten Armierungseisen angreifen können. Die beiden Klemmbacken befinden sich an zwei federnden Schenkeln, welche die Klemmkraft für die Klemmbacken erzeugen. Ein dritter Schenkel, der in einem stumpfen Winkel zu den beiden anderen Schenkeln angeordnet ist, dient als Distanzstück oder Fuss, welcher auf der Schalung aufliegt und den Abstand des durch die Armierungseisen gebildeten Netzes vor der Schalung bestimmt. Zum Gebrauch muss die Verbindungsklammer an den Kreuzungsstellen zweier Armierungseisen unter das erste Armierungseisen geschoben werden und gleichzeitig müssen die beiden Schenkel federnd zurückgebogen werden, so dass das zweite Armierungseisen unter die beiden Klemmbacken eintritt und nach dem Loslassen der beiden Schenkel von den Klemmbacken gegen das erste Armierungseisen gepresst wird.

Es ist Aufgabe der vorliegenden Erfindung, ein Mittel zu schaffen, bei dem die Nachteile der herkömmlichen Verbindungen vermieden werden.

Die Erfindung sieht eine Verbindungsklammer der eingangs erwähnten Gattung vor, welche gekennzeichnet ist durch einen Griffteil, mit welchem die Verbindungsklammer zur Herstellung der Verbindung um eine Drehachse in einer vorbestimmten Drehrichtung gedreht werden kann, und Klemmbackenträgern zur Verbindung des Griffteils mit den zweiten Klemmbacken, welche Klemmbacken sich von den Klemmbackenträgern (29) praktisch in Drehrichtung (39) weg erstrecken.

Um zwei sich kreuzende Armierungseisen miteinander zu verbinden, genügt es, die Verbindungsklammer auf die Kreuzungsstelle aufzusetzen und um etwa fünfundvierzig Grad zu drehen. Dies führt zu einer erheblichen Zeitersparnis gegenüber den Verfahren nach dem Stand der Technik.

Gemäss einem Ausführungsbeispiel der Erfindung ist die Verbindungsklammer dadurch gekennzeichnet, dass zwei erste Klemmbacken vorgesehen sind, welche in einem Abstand auf einander entgegengesetzten Seiten der Drehachse angeordnet sind, und dass für jede erste Klemmbacke ein Verbindungsglied vorgesehen ist, welches direkt oder indirekt mit dem Griffteil in Verbindung steht, wobei sich die Klemmbacken praktisch in entgegengesetzt zur genannten Drehrichtung von den Verbindungsgliedern weg erstrecken. Dies ermöglicht eine besonders stabile Verbindung der Armierungseisen. Vorteilhaft weist das jeweilige Verbindungsglied einen Endabschnitt auf, welcher in einer praktisch entgegengesetzt zur Drehrichtung verlaufenden Richtung mit Gefälle zur Kreuzungsebene gegen die erste Klemmbacke hin verläuft. Dadurch wird beim Drehen der Verbindungsklammer ein Spannen der Klemmbacken bewirkt, wie dies nachher noch näher beschrieben wird. Das jeweilige Verbindungsglied für die erste Klemmbacke kann dabei auch als Federmittel zur Erzeugung der Klemmkraft dienen. Um dies zu erreichen, kann die Verbindungsklammer beispielsweise aus einem Stück Federdraht bestehen. Wenn das jeweilige Verbindungsstück einen Anfangsabschnitt aufweist, von welchem sich der Endabschnitt in einem angenähert rechten Winkel wegerstreckt, kann der Anfangsabschnitt als Torsionsfeder wirken. Es ergibt sich dadurch eine günstige Federcharakteristik.

Eine zweckmässige Ausführungsform sieht vor, dass sich das Verbindungsglied vom Fuss weg erstreckt. Dies ergibt insbesondere bei der Herstellung der Verbindungsklammer aus einem Stück Federdraht eine einfache Konstruktion. Es ist aber auch möglich, die Verbindungsklammer so auszugestalten, dass sich das Verbindungsglied vom Griff weg erstreckt. Diese Ausführung eignet sich insbesondere für eine Verbindungsklammer aus Kunststoff.

Eine besonders einfache Ausführungsform der Verbindungsklammer sieht vor, dass die erste Klemmbacke durch eine Fläche des Griffteils gebildet wird. In diesem Fall ist es zweckmässig, die Klemmbackenträger als Federn auszubilden.

Je nach Bedarf kann die Verbindungsklammer aus einem Stück Federdraht, einem Blechstück oder aus einem Metallband geformt werden. Dabei ist es vorteilhaft, eine Beschichtung als Korrosionsschutz vorzusehen, damit eine schädliche Rostbildung vermieden wird. Es ist aber auch möglich, die Verbindungsklammer einstückig aus Kunststoff herzustellen, wobei ein Kunststoff mit entsprechend federnden Eigenschaften Anwendung findet.

Eine vorteilhafte Ausführungsform der Verbindungsklammer sieht vor, dass das jeweilige Verbindungsglied vom Griffteil zur zweiten Backe einen Anfangsabschnitt aufweist, zu welchem sich der Endabschnitt in praktisch entgegengesetzter Richtung erstreckt. Der Anfangsabschnitt kann dabei vorteilhaft in einem Bogen von etwa hundertachtzig Grad in den Endabschnitt übergehen. Auf diese Weise wird eine relativ lange Feder mit einer relativ flachen Federcharakteristik gebildet. Vorteilhaft weisen die ersten Klemmbacken Zähne auf. Dies ermöglicht eine gute Verbindung, auch wenn die Armierungseisen nicht genau in einem Winkel von neunzig Grad zueinander angeordnet sind.

Bei den zweiten Klemmbacken ist vorteilhaft eine federnde Nase vorgesehen, um nach dem Einrasten der Backe am Armierungseisen wie mit einem Widerhaken ein Ausrasten zu verhindern.

Ausführungsbeispiele der Erfindung werden nun unter Bezugnahme auf die Zeichnung beschrieben. Es zeigt:
- Fig. 1: eine aus Federdraht gefertigte Verbindungsklammer, welche zwei sich kreuzende Armierungseisen miteinander verbindet,
- Fig. 2: eine Ansicht in Richtung des Pfeils II in Fig. 1,
- Fig. 3: eine Ansicht der Verbindungsklammer von Fig. 1 von oben gesehen,
- Fig. 4: eine Ansicht wie in Fig. 3, jedoch vor der Drehung der Verbindungsklammer zur Verbindung der Armierungseisen,
- Fig. 5: eine Ansicht der Verbindungsklammer in Richtung des Pfeils V von Fig. 4,
- Fig. 6: eine Ansicht wie in Fig. 5 mit einer anderen Ausgestaltung der ersten Klemmbacken,
- Fig. 7: eine Verbindungsklammer wie in Fig. 1, jedoch aus einem Blechstück gefertigt,
- Fig. 8: eine Ausführung einer Verbindungsklammer aus Kunststoff,
- Fig. 9: ein Stapel von Verbindungsklammern gemäss Fig. 8,
- Fig. 10: eine weitere vereinfachte Ausführung einer Verbindungsklammer, aus Kunststoff,
- Fig. 11: eine bevorzugte Ausführung einer Verbindungsklammer aus Kunststoff, und
- Fig. 12: in vergrösserter Darstellung eine Seitenansicht eines Klemmbackenträgers mit der zweiten Klemmbacke.

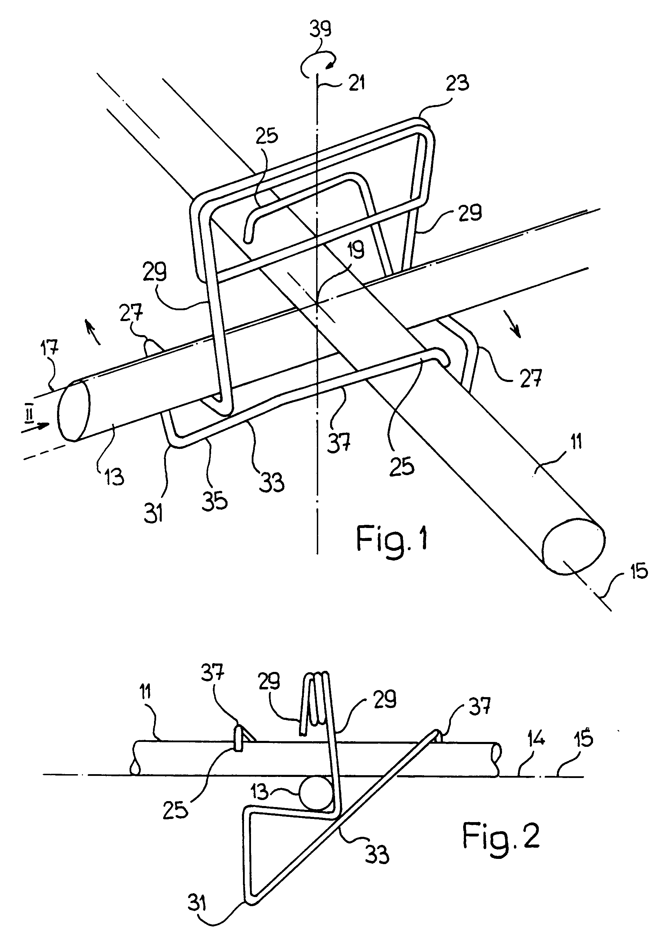

In Fig. 1 ist ein Ausführungsbeispiel der erfindungsgemässen Verbindungsklammer dargestellt, welche einen ersten länglichen Gegenstand 11 mit einem zweiten länglichen Gegenstand verbindet. Bei diesen Gegenständen 11, 13 kann es sich beispielsweise um Armierungseisen oder Kunststoffrohre handeln. Wenn in dieser Beschreibung meist nur von Armierungseisen die Rede ist, so ist damit keine Beschränkung der Anwendung beabsichtigt.

Die Verbindungsklammer stellt ein dreidimensionales Gebilde dar, welches in jeder beliebigen Lage der sich kreuzenden Armierungseisen 11, 13 verwendbar ist. In Fig. 1 ist die Verbindungsklammer von oben her eingesetzt worden. Es wäre aber auch möglich gewesen, die Klammer von unten her einzusetzen. Es wird daher in der nachfolgenden Beschreibung auf Begriffe wie "oben" oder "unten" verzichtet. Damit aber die Beschreibung besser verständlich ist, wird auf die geometrischen Verhältnisse hingewiesen, welche durch die sich kreuzenden Armierungseisen 11, 13 geschaffen werden.

Man kann sich zwischen den Armierungseisen 11, 13 eine Ebene 14 (Fig. 2) vorstellen, in welcher die Kreuzungslinien 15, 17 liegen, die sich im Kreuzungspunkt 19 kreuzen. Es handelt sich dabei um die Linien, wo die Oberflächen der beiden Armierungseisen 11, 13 eine dazwischen gelegte (unendlich) dünne Platte berühren würden. Diese Kreuzungslinien 15, 17 liegen in der Ebene 14, die in dieser Beschreibung als Kreuzungsebene bezeichnet ist. Senkrecht zur Kreuzungsebene ist eine Achse 21 eingezeichnet , die durch den Kreuzungspunkt 19 geht. Es ist dies praktisch die Drehachse, um welche die Verbindungsklammer gedreht wurde, um die beiden Armierungseisen 11, 13 miteinander zu verbinden. Diese Drehachse 21 stellt auch die Symmetrieachse der Verbindungsklammer dar, welche zwei rotationssymmetrische Hälften aufweist. In der nachfolgenden Beschreibung werden daher für die einzelnen Organe der um 180 Grad versetzten Hälften die gleichen Bezugszeichen verwendet.

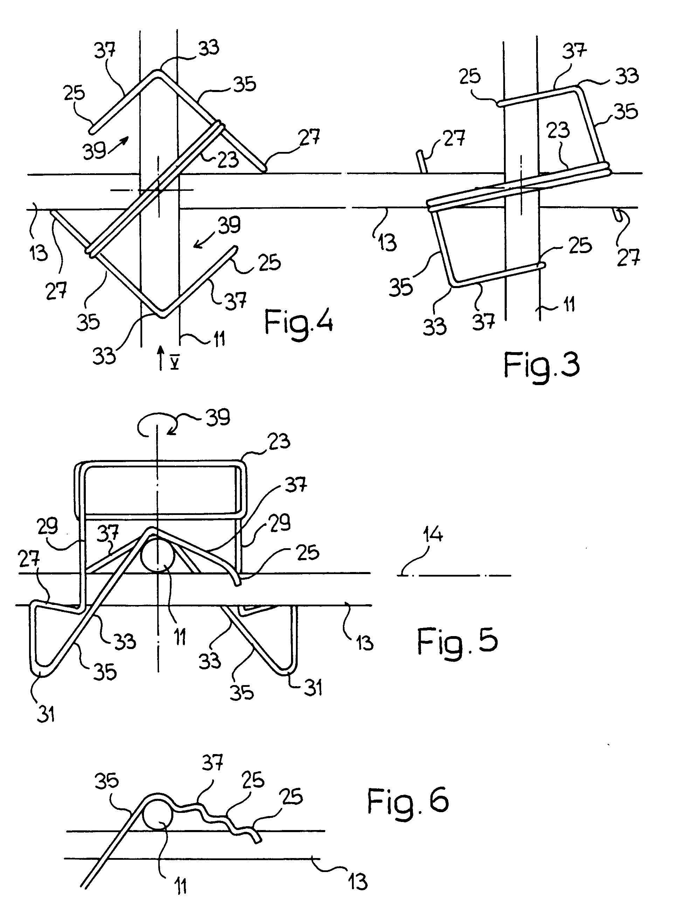

Die Verbindungsklammer besitzt einen Griff 23, mit welchem, wie in den Figuren 3 und 4 gezeigt, durch eine Drehung von etwa fünfundvierzig Grad die ersten Klemmbacken 25 und die zweiten Klemmbacken 27 in die Stellung von Figur 1 und 3 gebracht werden können, in welcher sie die Verbindung zwischen den Armierungseisen 11 und 13 herstellen. Die ersten Klemmbacken 25 greifen, vom Griff 23 her gesehen, in einer Richtung senkrecht zur Kreuzungsebene 14 (Fig. 2) am Armierungseisen 11 an. Die zweiten Klemmbacken 27 greifen von der anderen Seite her am Armierungseisen 13 an. Je ein Klemmbackenträger 29 dient der Verbindung des Griffteils 23 mit der entsprechenden Klemmbacke 27.

Von der jeweiligen zweiten Klemmbacke 27 erstreckt sich ein Abschnitt nach unten und bildet einen Fuss 31, welcher als Auflage auf einem Schalungsbrett dienen kann und dafür sorgt, dass die Armierungseisen 13, 11 genügend weit in das Innere des Bauwerks zu liegen kommen. Wie insbesondere aus Figur 2 ersichtlich ist, erstreckt sich vom Fuss 31 ein Verbindungsglied 33 zur ersten Klemmbacke 25 hin. Dieses Verbindungsglied 33 besitzt einen Anfangsabschnitt 35 und einen Endabschnitt 37. Der Endabschnitt 37 erstreckt sich in einem angenähert rechten Winkel weg vom Anfangsabschnitt 35, was besonders gut aus Fig. 3 ersichtlich ist. Das jeweilige Verbindungsglied 33 dient auch als Feder zur Erzeugung der Klemmkraft. Wie aus Figur 5 ersichtlich ist, verläuft der jeweilige Endabschnitt 37 des Verbindungsglieds 33 in einer praktisch entgegengesetzt zur Drehrichtung verlaufenden Richtung mit Gefälle zur Kreuzungsebene 14 hin. Wird somit die Verbindungsklammer aus der Stellung der Figuren 4 und 5 in die Stellung gemäss den Figuren 1 bis 3 gedreht, so werden die ersten Klemmbacken 25 entgegen der Federkraft der Verbindungsglieder 33 angehoben. Betrachtet man Figur 3, so ist ersichtlich, dass der Anfangsabschnitt 35 beim Anheben der ersten Klemmbacke 25 wie ein Torsionsstab wirkt.

Es kann vorkommen, dass sich die Armierungseisen nicht genau in einem Winkel von neunzig Grad kreuzen. Um auch in solchen Fällen eine gute Verbindung zu schaffen, kann der Endabschnitt 37 eine Wellen- oder Zahnform aufweisen, wie dies in Figur 6 dargestellt wird. Es können dann wahlweise verschiedene Abschnitte 25 als Klemmbacke dienen.

Abschliessend sei nochmals darauf hingewiesen, wie einfach sich eine Verbindung von Armierungseisen durch die beschriebene Verbindungsklammer erreichen lässt. Zur Herstellung einer Verbindung wird die Verbindungsklammer auf die sich kreuzenden Armierungseisen gelegt (Figur 4) und dann in Richtung des Pfeils 39 in die in Figur 3 gezeigte Stellung gedreht, so dass die Verbindung geschaffen wird, wie sie besonders gut aus den Figuren 1 und 2 ersichtlich ist.

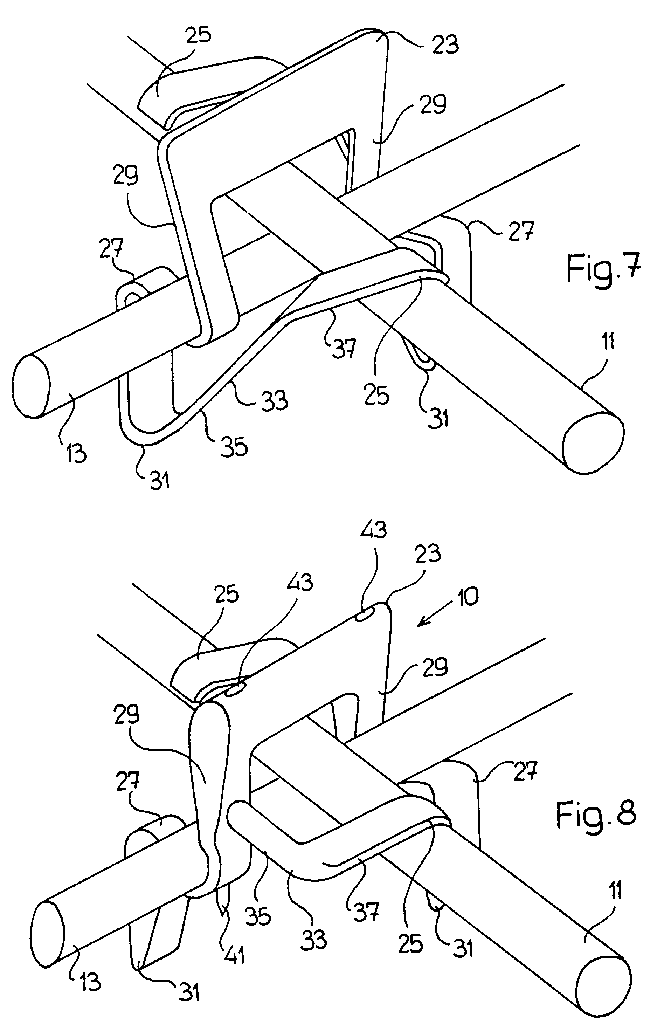

Statt aus Federdraht kann die Verbindungsklammer auch aus einem Blechstück (Figur 7) oder in analoger Weise aus einem Metallband geformt werden. Möglich ist auch eine Ausbildung der Verbindungsklammer 10 aus Kunststoff, wie dies beispielsweise in Figur 8 gezeigt wird. Es sind also verschiedene Ausbildungen und Formgebungen möglich, ohne vom Grundprinzip der Erfindung abzuweichen.

Bei den Verbindungsklammern der Figuren 7 und 8 sind zur Bezeichnung gleicher Teile die gleichen Bezugsziffern verwendet worden wie bei der Verbindungsklammer gemäss den Figuren 1 bis 5. Es kann daher auf die vorangehende Beschreibung verwiesen werden.

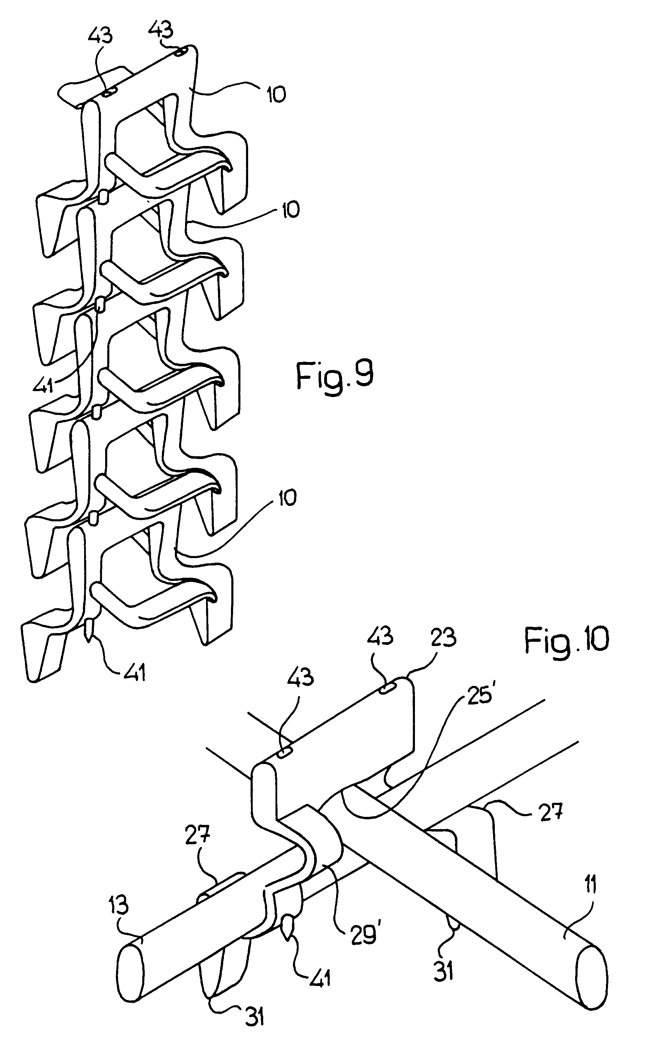

Wie aber Figur 9 zeigt, können Verbindungsklammern 10 aus Kunststoff leicht stapelbar gemacht werden. Zu diesem Zweck ist bei jedem Klemmbackenträger 29 unten ein Zapfen 41 angeordnet. Diese Zapfen 41 können in Oeffnungen 43 des Griffs 23 eingreifen, wie dies in Figur 9 dargestellt ist.

Figur 10 zeigt eine vereinfachte Ausbildung der Verbindungsklammer aus Kunststoff. Bei diesem Ausführungsbeispiel wird die erste Klemmbacke durch eine Fläche 25′ des Griffteils 23 gebildet. Die notwendige Federkraft wird durch die federnde Ausbildung der Klemmbackenträger 29 erreicht. Auch diese Klammer kann durch Drehen eingesetzt werden, wie dies vorher beschrieben wurde. Wenn mit der Verbindungsklammer von Figur 10 die gleiche Klemmkraft zum Zusammenhalten der Armierungseisen erreicht werden soll, ist aber zur Herstellung der Verbindung eine grössere Kraft notwendig als bei den vorher beschriebenen Klammern.

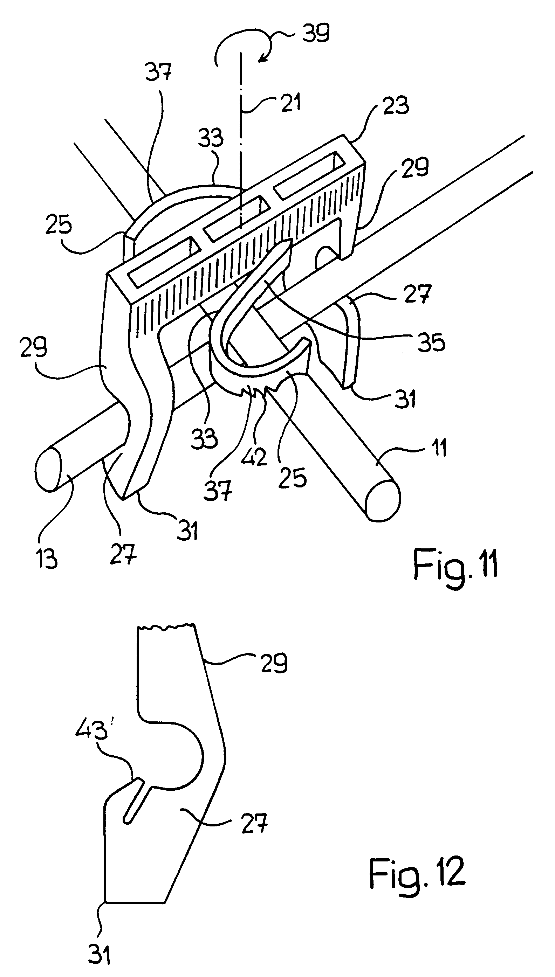

In den Figuren 11 und 12 ist ein bevorzugtes Ausführungsbeispiel einer Verbindungsklammer dargestellt, die einstückig aus Kunststoff besteht. Diese Ausführung ermöglicht die Herstellung der Verbindungsklammer mit einem verhältnismässig einfachen Spritzwerkzeug.

Die Verbindungsklammer besitzt einen Griff 23, mit welchem durch eine Drehung in Richtung des Pfeils 39 um die Drehachse 21 die Klemmbacken 25 und 27 in die gezeichnete Stellung gebracht worden sind, in welcher sie die Verbindung zwischen dem Armierungseisen 11 und 13 herstellen. Je ein Klemmbackenträger 29 dient der Verbindung des Griffteils 23 mit der entsprechenden Klemmbacke 27. Der Fuss 31 dient der Auflage auf einem Schalungsbrett und sorgt dafür, dass die Armierungseisen genügend weit in das Innere des Bauwerks zu liegen kommen.

Vom Griff 23 her erstreckt sich ein Verbindungsglied 33 zur jeweiligen Klemmbacke 25. Dieses Verbindungsglied 33 besitzt einen Anfangsabschnitt 35, welcher in einem Bogen von etwa hundertachtzig Grad in einen Endabschnitt 37 übergeht. Das jeweilige Verbindungsglied 33 dient auch als Feder zur Erzeugung des Klemmkraft. Durch die beschriebene Formgebung kann eine relativ flache Federcharakteristik erzielt werden, was wiederum die Verwendung der Verbindungsklammer für Armierungseisen verschiedenen Durchmessers ermöglicht.

Die Klemmbacken 25 weisen Zähne 42 auf, um auch in den Fällen eine gute Verbindung zu schaffen, wo die Armierungseisen nicht genau in einem Winkel von neunzig Grad sich kreuzen. Wie ferner Fig. 12 zeigt, ist bei der Klemmbacke 27 eine federnde Nase 43′ vorgesehen, welche beim Angreifen der Backe 27 am Armierungseisen verformt wird und nach dem Einrasten der Backe 27 in die dargestellte Lage zurückfedert, um wie ein Widerhaken ein Ausrasten zu verhindern.

## Patentansprüche

1. Verbindungsklammer zum Verbinden eines ersten länglichen Gegenstandes (11) mit einem zweiten länglichen Gegenstand (13), die sich kreuzen, insbesondere von Armierungseisen, mit mindestens einer ersten Klemmbacke (25, 25'), welche von einer Seite her am ersten Gegenstand (11) angreifen kann, zwei zweiten Klemmbacken (27), welche von der entgegengesetzten Seite her am zweiten Gegenstand (13) angreifen können, Federmitteln (33, 29), um Klemmkraft für die Klemmbacken (25, 27) zu erzeugen, und mindestens einem Fuss (31) zur Auflage auf einem Schalungsbrett, gekennzeichnet durch einen Griffteil (23), mit welchem die Verbindungsklammer zur Herstellung der Verbindung um eine Drehachse (39) in einer vorbestimmten Drehrichtung gedreht werden kann, und Klemmbackenträgern (29) zur Verbindung des Griffteils (23) mit den zweiten Klemmbacken, welche Klemmbacken sich von den Klemmbackenträgern (29) praktisch in Drehrichtung (39) weg erstrecken.

2. Verbindungsklammer nach Anspruch 1, dadurch gekennzeichnet, dass zwei erste Klemmbacken (25) vorgesehen sind, welche in einem Abstand auf einander entgegengesetzten Seiten der Drehachse (21) angeordnet sind, und dass für jede erste Klemmbacke (25) ein Verbindungsglied (33) vorgesehen ist, welches direkt oder indirekt mit dem Griffteil (23) in Verbindung steht, wobei sich die Klemmbacken (25) praktisch entgegengesetzt zur genannten Drehrichtung (39) von den Verbindungsgliedern (33) weg erstrecken.

3. Verbindungsklammer nach Anspruch 2, dadurch gekennzeichnet, dass das jeweilige Verbindungsglied (33) einen Endabschnitt (37) aufweist, welcher in einer praktisch entgegengesetzt zur Drehrichtung (39) verlaufenden Richtung mit Gefälle zur Kreuzungsebene (14) gegen die erste Klemmbacke (25) hin verläuft.

4. Verbindungsklammer nach einem der Ansprüche 1 bis 3, dadurch gekennzeichnet, dass das jeweilige Verbindungsglied (33) für eine erste Klemmbacke (25) auch als Federmittel zur Erzeugung der Klemmkraft dient.

5. Verbindungsklammer nach einem der Ansprüche 2 bis 4, dadurch gekennzeichnet, dass das jeweilige Verbindungsglied (33) einen Anfangsabschnitt (35) aufweist, von welchem sich der Endabschnitt (37) in einem angenähert rechten Winkel weg erstreckt.

6. Verbindungsklammer nach einem der Ansprüche 2 bis 5, dadurch gekennzeichnet, dass sich das Verbindungsglied (33) vom Fuss (31) weg erstreckt.

7. Verbindungsklammer nach einem der Ansprüche 2 bis 6 , dadurch gekennzeichnet, dass das jeweilige Verbindungsglied (33) einen Anfangsabschnitt (35) aufweist, zu welchem sich der Endabschnitt (37) in praktisch entgegengesetzter Richtung erstreckt.

8. Verbindungsklammer nach einem der Ansprüche 1 bis 7, dadurch gekennzeichnet, dass die ersten Klemmbacken (25) Zähne (42) aufweisen.

9. Verbindungsklammer nach einem der Ansprüche 2 bis 7, dadurch gekennzeichnet, dass sich das Verbindungsglied (33) vom Griff (23) weg erstreckt.

10. Verbindungsklammer nach Anspruch 1, dadurch gekennzeichnet, dass die erste Klemmbacke (25') durch eine Fläche des Griffteils (23) gebildet wird.

11. Verbindungsklammer nach einem der Ansprüche 1 bis 10, dadurch gekennzeichnet, dass sie Mittel, z.B. Zapfen (41) und Oeffnungen (43), zum Stapeln aufweist.

12. Verbindungsklammer nach einem der Ansprüche 1 bis 11, dadurch gekennzeichnet, dass sie aus Kunststoff besteht.

13. Verbindungsklammer nach einem der Ansprüche 1 bis 11, dadurch gekennzeichnet, dass sie aus einem Stück Federdraht besteht.

14. Verbindungsklammer nach einem der Ansprüche 1 bis 11, dadurch gekennzeichnet, dass sie aus einem Blechstück besteht.

15. Verbindungsklammer nach einem der Ansprüche 1 bis 11, dadurch gekennzeichnet, dass sie aus einem Metallband besteht.

16. Verbindungsklammer nach einem der Ansprüche 13 bis 15, dadurch gekennzeichnet, dass sie eine Beschichtung als Korrosionsschutz aufweist.

17. Verbindungsklammer nach einem der Ansprüche 1 bis 16, dadurch gekennzeichnet, dass an den zweiten Klemmbacke (27) eine federnde Nase (43') vorgesehen ist.

## Claims

1. A clamp for connecting a first elongated object (11) with a crossing second elongated object, in particular reinforcing iron bars, comprising at least one first clamping bracket (25, 25') which can grip the first object (11) from one side, two second clamping brackets (27) which can grip the second object (13) from the opposite side, spring means (33, 29) to provide clamping force for the brackets (25, 27), and at least one foot (31) for resting on a planking board, characterised by a grip section (23) which permits to rotate the clamp in a predetermined direction of rotation for establishing the connection, and clamping bracket supports (29) for connecting the grip section (23) with the second clamping brackets which extend from the clamping bracket supports (29) practically in direction of rotation (39).

2. Clamp as in claim 1, characterised in that two first clamping brackets (25) are provided which are located at a distance from each other on opposite sides of the axis (21) of rotation, and in that for each first clamping brackets (25) a connection member (33) is provided which is directly or indirectly connected to the grip section (23), said clamping brackets (25) extending from the connection members in a direction practically opposed to said direction of rotation (39).

3. Clamp as in claim 2, characterised in that the connection member (33) has an end portion (37) which extends to the first clamping bracket (25) in a direction practically opposed to the direction of rotation (39) with an inclination to the crossing plane (14).

4. Clamp as in one of the claims 1 to 3, characterised in that the connection member (33) for a first clamping bracket (25) serves also as spring means for producing the clamping force.

5. Clamp as in one of the claims 2 to 4, characterised in that the connection member (33) comprises an initial section (35) from which the terminal section (37) extends at an approximatively right angle.

6. Clamp as in one of the claims 2 to 5, characterised in that the connection member (33) extends from the foot (31).

7. Clamp as in one of the claims 2 to 6, characterised in that the connection member (33) has an initial section (35) to which the terminal section (37) extends in practically opposite direction.

8. Clamp as in one of the claims 1 to 7, characterised in that the first clamping brackets (25) have teeth (42).

9. Clamp as in one of the claims 2 to 7, characterised in that the connection member (33) extends from the grip (23).

10. Clamp as in claim 1, characterised in that the first clamping bracket (25') is provided by a surface of the grip section (23).

11. Clamp as in one of the claims 1 to 10, characterised in that it comprises means, e.g. studs (41) and openings (43), for stapling.

12. Clamp as in one of the claims 1 to 11, characterised in that it consists of plastics.

13. Clamp as in one of the claims 1 to 11, characterised in that it consists of a piece of spring wire.

14. Clamp as in one of the claims 1 to 11, characterised in that it consists of a piece of sheet metal.

15. Clamp as in one of the claims 1 to 11, characterised in that it consists of metal band.

16. Clamp as in one of the claims 13 to 15, characterised in that it comprises a coating as protection against corrosion.

17. Clamp as in one of the claims 1 to 16, characterised in that at the second clamping bracket (27) a resilient nose (43') is provided.

## Revendications

1. Agrafe d'assemblage pour joindre ensemble un premier objet de forme allongée (11) et un second objet de forme allongée (13) qui se croisent, en particulier des fers d'armature, comprenant au moins une première mâchoire de serrage (25, 25') qui peut saisir d'un côté le premier objet (11), deux secondes mâchoires de serrage (27) qui peuvent saisir du côté opposé le second objet (13), des moyens à ressort (33, 29) pour produire une force de serrage pour les mâchoires de serrage (25, 27) et au moins un pied (31) destiné à prendre appui sur une planche de coffrage, caractérisée par une partie servant de poignée (23), avec laquelle on peut faire tourner l'agrafe d'assemblage autour d'un axe de rotation (21) dans un sens prédéterminé (39) pour réaliser l'assemblage, et par des porte-mâchoires (29) qui relient la poignée (23) aux secondes mâchoires de serrage, lesquelles mâchoires de serrage s'étendent à partir des porte-mâchoires (29) pratiquement dans le sens de rotation (39).

2. Agrafe d'assemblage selon la revendication 1, caractérisée en ce qu'il est prévu deux premières mâchoires de serrage (25) qui sont situées à distance l'une de l'autre sur des côtés mutuellement opposés de l'axe de rotation (21), et en ce qu'il est prévu, pour chaque première mâchoire de serrage (25), un élément de jonction (33) qui est en rapport direct ou indirect avec la poignée (23), les mâchoires de serrage (25) s'étendant à partir des éléments de jonction (33) pratiquement en sens opposé audit sens de rotation (39).

3. Agrafe d'assemblage selon la revendication 2, caractérisée en ce que chaque élément de jonction (33) comporte un segment d'extrémité (37) qui s'étend vers la première mâchoire de serrage (25) dans une direction pratiquement opposée au sens de rotation (39), avec une inclinaison par rapport au plan de croisement (14).

4. Agrafe d'assemblage selon l'une quelconque des revendications 1 à 3, caractérisée en ce que l'élément de jonction (33) sert aussi, pour chaque première mâchoire de serrage (25), de moyen à ressort pour produire la force de serrage.

5. Agrafe d'assemblage selon l'une quelconque des revendications 2 à 4, caractérisée en ce que chaque élément de jonction (33) comporte un segment initial (35) à partir duquel le segment d'extrémité (37) s'étend en formant un angle approximativement droit.

6. Agrafe d'assemblage selon l'une quelconque des revendications 2 à 5, caractérisée en ce que l'élément de jonction (33) s'étend à partir du pied (31).

7. Agrafe d'assemblage selon l'une quelconque des revendications 2 à 6, caractérisée en ce que chaque élément de jonction (33) comporte un segment initial (35) par rapport auquel le segment d'extrémité (37) s'étend en direction pratiquement opposée.

8. Agrafe d'assemblage selon l'une quelconque des revendications 1 à 7, caractérisée en ce que les premières mâchoires de serrage (25) présentent des dents (42).

9. Agrafe d'assemblage selon l'une quelconque des revendications 2 à 7, caractérisée en ce que l'élément de jonction (33) s'étend à partir de la poignée (23).

10. Agrafe d'assemblage selon la revendication 1, caractérisée en ce que la première mâchoire de serrage (25') est constituée par une surface de la partie servant de poignée (23).

11. Agrafe d'assemblage selon l'une quelconque des revendications 1 à 10, caractérisée en ce qu'elle comporte des moyens, par exemple des chevilles (41) et des trous (43), pour son empilage.

12. Agrafe d'assemblage selon l'une quelconque des revendications 1 à 11, caractérisée en ce qu'elle est en matière plastique.

13. Agrafe d'assemblage selon l'une quelconque des revendications 1 à 11, caractérisée en ce qu'elle est constituée par un morceau de fil d'acier à ressort.

14. Agrafe d'assemblage selon l'une quelconque des revendications 1 à 11, caractérisée en ce qu'elle est constituée par un morceau de tôle.

15. Agrafe d'assemblage selon l'une quelconque des revendications 1 à 11, caractérisée en ce qu'elle est constituée par un ruban de métal.

16. Agrafe d'assemblage selon l'une quelconque des revendications 13 à 15, caractérisée en ce qu'elle présente un revêtement de protection contre la corrosion.

17. Agrafe d'assemblage selon l'une quelconque des revendications 1 à 16, caractérisée en ce qu'un taquet à ressort (43') est prévu sur les secondes mâchoires de serrage (27).
